# EUROPEAN PATENT APPLICATION

(11) **EP 1 471 747 A2**
(43) Date of publication of application: **27.10.2004**
(21) Application number: 03024949.4
(22) Date of filing: 29.10.2003
(51) Int. Cl.: H04N 9/73

(54) **Method for white balancing an image**

(30) Priority: 21.04.2003 US 420097
(71) Applicant: Hewlett-Packard Development Company, L.P., Houston, Texas 77070 (US)
(72) Inventor: Berge, Thomas G., Camas WA 98607 (US); Bhaskar, Ranjit, Portland OR 97214 (US); Gondek, Jay S., Camas WA 98607 (US); Schramm, Morgan T., Portland OR 97214 (US)
(74) Representative: Schoppe, Fritz, Dipl.-Ing.

(57) **Abstract**

A method (300) for white balancing an image. The method may include determining (304) a location of a human facial region within the image. Additionally, the method may include determining (306) skin color of the human facial region. The method also may include determining (310) a correction factor to change the skin color to substantially match a known range of skin colors. Furthermore, the method may include applying (312) the correction factor to the image to provide white balancing.

## Description

### BACKGROUND

Computers, or devices that include embedded computers (e.g., a digital camera), may be utilized to process and subsequently store, view or print out digital images. When a digital camera conventionally captures an image, it tries to determine what the illumination was in order to perform white balancing for the newly captured image. Often, the typical digital camera makes wrong determinations or the illumination is not something the digital camera can properly determine (e.g., a combination of daylight and florescent light) thereby resuming in improperly white balanced images. Another reason digital cameras typically produce improper white balanced images is that their illumination setting can be incorrectly set for the illuminant present when the images are captured. It is understood that images that are incorrectly white balanced have an unwanted hue cast (e.g., reddish or greenish hue dominating the image) that is typically most noticeable in flesh colors such as human facial regions.

Two known techniques for correcting the white balancing of images are the Gray World Assumption and the White Point Estimation. However, there are disadvantages associated with these techniques. For example, the Gray World Assumption is usually susceptible to failure with images that do not contain enough variation in color content, such as a portrait on a blue background. Furthermore, the White Point Estimation typically fails in images where these is no white (or light neutral-colored) object in the original scene.

For these and other reasons, there is a need for the present invention.

### SUMMARY OF THE INVENTION

A method for white balancing an image. The method may indude determining the location of the human facial region within the image. Additionally, the method may include determining skin color of the human facial region. The method also may indude determining a correction factor to change the skin color to substantially match a known range of skin colors. Furthermore, the method may include applying the correction factor to the image to provide white balancing.

### BRIEF DESCRIPTION OF THE DRAWINGS

Figure 1 is a flowchart of steps performed in accordance with an embodiment of the present invention for white balancing an image.
Figure 2A is a diagram illustrating an exemplary image that may be received for processing in accordance with an embodiment of the present invention.
Figure 2B is a diagram illustrating the positive effects of processing the image of Figure 2A in accordance with an embodiment of the present invention.
Figure 3 is a flowchart of steps performed in accordance with another embodiment of the present invention for white balancing an image.
Figure 4 is a diagram of an exemplary white balancing enhancement dialog box that may be utilized in accordance with an embodiment of the present invention.
Figure 5 is a block diagram of an exemplary network that may be utilized in accordance with an embodiment of the present invention.
Figure 6 is a block diagram of an embodiment of an exemplary computer system that may be used in accordance with the present invention.

### DESCRIPTION OF THE PREFERRED EMBODIMENTS

Reference will now be made in detail to embodiments of the invention, examples of which are illustrated in the accompanying drawings. While the invention will be described in conjunction with embodiments, it will be understood that they are not intended to limit the invention to these embodiments. On the contrary, the invention is intended to cover alternatives, modifications and equivalents, which may be included within the spirit and scope of the invention as defined by the appended daims. Furthermore, in the following detailed description of the present invention, numerous specific details are set forth in order to provide a thorough understanding of the present invention. However, it will be evident to one of ordinary skill in the art that the present invention may be practiced without these specific details. In other instances, well known methods, procedures, components, and circuits have not been described in detail as not to unnecessarily obscure aspects of the present invention.

### NOTATION AND NOMENCLATURE

Some portions of the detailed descriptions which follow are presented in terms of procedures, logic blocks, processing, and other symbolic representations of operations on data bits within a computing system or digital system memory. These descriptions and representations are the means used by those skilled in the data processing arts to most effectively convey the substance of their work to others skilled in the art. A procedure, logic block, process, etc., is herein, and generally, conceived to be a self-consistent sequence of steps or instructions leading to a desired result. The steps may involve physical manipulations of physical quantities. Usually, though not necessarily, these physical manipulations take the form of electrical or magnetic signals capable of being stored, transferred, combined, compared, and otherwise manipulated in a computing system or similar electronic computing device. For reasons of convenience, and with reference to common usage, these signals are referred to as bits, values, elements, symbols, characters, terms, numbers, or the like with reference to the present Invention.

It should be borne in mind, however, that all of these terms are to be interpreted as referencing physical manipulations and quantities and are merely convenient labels and are to be interpreted further in view of terms commonly used in the art. Unless specifically stated otherwise as apparent from the following discussions, it is understood that throughout discussions of the present invention, discussions utilizing terms such as "determining", "applying", "processing", "performing", "deciding", "ascertaining", "transmitting", "receiving", "retrieving", "providing", "recognizing", "generating", "utilizing", "removing", "exduding", "discarding", "implementing", "employing", "storing" or the like, refer to the action and processes of a computing system, or similar electronic computing device, that manipulates and transforms data. The data is represented as physical (electronic) quantities within the computing system's registers and memories and is transformed into other data similarly represented as physical quantities within the computing system's memories or registers or other such information storage, transmission, or display devices.

### EXEMPLARY OPERATIONS IN ACCORDANCE WITH THE PRESENT INVENTION

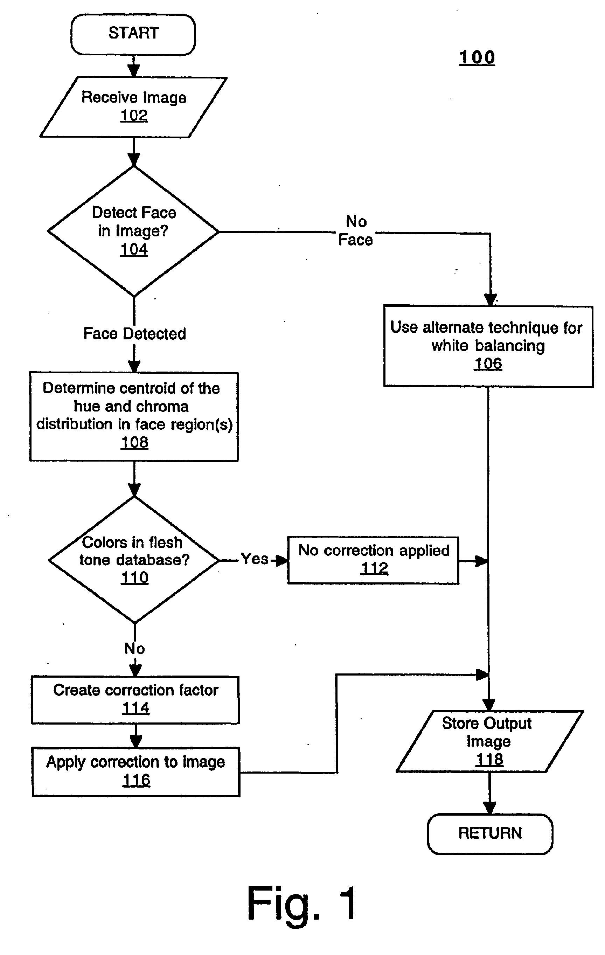

Figure 1 is a flowchart 100 of steps performed in accordance with an embodiment of the present invention for white balancing an image. Flowchart 100 indudes processes of the present invention which, in one embodiment, are carried out by a processors) and electrical components under the control of computer readable and computer executable instructions. The computer readable and computer executable instructions may reside, for example, in data storage features such as computer usable volatile memory, computer usable non-volatile memory and/or computer usable mass data storage. However, the computer readable and computer executable instructions may reside in any type of computer readable medium. Although specific steps are disclosed in flowchart 100, such steps are exemplary. That is, the present embodiment Is well suited to performing various other steps or variations of the steps recited in Figure 1. Within the present embodiment, it should be appreciated that the steps of flowchart 100 may be performed by software, by hardware or by any combination of software and hardware.

It is noted that the functionality of flowchart 100 may be implemented with, but is not limited to, software and/or hardware associated with a printer (e.g., printer driver), digital camera, image scanner, computer or any other image processing system.

The present embodiment provides a method for white balancing an image. For example, when an image is received, a determination is made as to whether any human face exists within the image. If not, the entire image may be processed with one or more white balancing techniques in order to improve its visual quality. However, if there is one or more human faces present within the image, the image is processed in a different manner. Specifically, the colors that are within the region or regions that define a human face within the image are compared to known facial colors. If there is a discrepancy, a correction factor is determined that, when applied to the image, will alter the colors of the human facial region(s) to substantially match known facial colors. Subsequent, the correction factor is applied to the entire image thereby white balancing it and removing hue cast In this manner, white balancing may be provided to the entire image based upon the correction factor determined to correct the facial colors of the human facial region(s).

At step 102 of Figure 1, an image (e.g., a digital image) is received or retrieved In order to be processed by flowchart 100. It is noted that there are a wide variety of reasons for receiving or retrieving an image at step 102 to be processed. For example, the image may be received at step 102 in order to subsequently store it on a memory device, view it on a display device or print it out on a printer, just to name a few. Furthermore, the image may be received at step 102 in diverse ways in accordance with the present embodiment. For example, the image may be received from an image scanner and/or a digital camera coupled to a computing device. Additionally, the data associated with the image may be received at step 102 by software and/or hardware associated with a printer (e.g., printer driver), digital camera, image scanner, computer or any other image processing system. The flowchart 100 is capable of operating with any image processing system.

In step 104, the present embodiment determines whether a human face(s) is present within the received (or retrieved) image. If it is determined that no human faces are present within the image, the present embodiment proceeds to step 106. However, if it is determined that there is one or more human faces present within the image, the present embodiment proceeds to step 108. It is understood that step 104 may be implemented in diverse ways. For example, a Neural Network-Base Face Detection algorithm, the Jones Viola Algorithm, and/or any other face detection technique may be utilized in order to perform the functionality of step 104. It is noted that if a human face(s) is located within the image, its location (or position) within the image may then be determined. The location of the human face(s) may be contained within a bounding box, a binary mask, or some type of defined facial region.

At step 106 at Figure 1, the entire image is processed with one or more white balancing techniques (or hue cast removal techniques) in order to improve the visual quality of the image. It is noted that there are diverse white balancing techniques or hue cast removal techniques that may be implemented at step 106. For example, the white balancing technique may indude, but is not limited to, the Gray World Assumption, the White Point Estimation, and/or any other white balancing technique or hue cast removal technique. After step 106, the present embodiment proceeds to step 118.

In step 108, the present embodiment determines a centroid of the hue and chroma distribution within the defined face region(s), or some portion of the defined face region(s). There are a wide variety of ways that may be implemented at step 108. For example, as part of determining the centroid of the hue and chroma distribution with the face region(s), an image smoothing technique may be utilized in order to smooth the transitions between the edge of the face region(s) and also to reduce the effect of those colors that are not really flesh colors (e.g., eyebrow color, lip color, eye color and the like). It is appreciated that by smoothing the face region(s) of the image, those non-flesh colors have less of an impact on the color population of the face region(s). Additionally, as part of determining the centroid of the hue and chroma distribution with the face region(s), outlier hue and chroma values of said human facial region may be removed from consideration. It is noted that, alternatively, step 108 may be modified to determine an average, rather than the centroid, of the hue and chroma of said human facial region(s).

At step 110 of Figure 1, a determination is made as to whether the centroid of the hue and chroma distribution of the face region(s) substantial match a range of known flesh (or skin) colors of a database. The database of known flesh (or skin) colors may be algorithmically generated in a manner known by those in the art. Alternatively, commercially available face detection software can indude a database of known flesh (or skin) colors. If the centroid of the hue and chroma distribution of the face region(s) does not substantially match the range of known flesh colors stored in the database at step 110, the present embodiment proceeds to step 114. However, if the centroid of the hue and chroma distribution of the face region(s) substantially matches known flesh colors of the database at step 110, the present embodiment proceeds to step 112. It is understood that step 110 may indude converting the centroid of the hue and chroma distribution of the face region(s) into the same color space as the flesh color database In order to facilitate the comparison and determination of step 110. For example, if the flesh color database is in the standard red-green-blue (sRGB) color space, then the centroid data may be converted into that same color space as part of the determination at step 110.

In step 112, no correction is applied to the image since the colors (e.g., centroid of the hue and chroma distribution) of the human face region(s) substantially match known flesh (or skin) colors stored within the database. After step 112, the present embodiment proceeds to step 118.

At step 114, a correction factor is created or generated which changes (or moves) the determined centroid of the hue and chroma distribution of the face region(s) into the region of known flesh (or skin) colors of the database. It is appreciated that the correction factor of step 114 may be determined and generated in diverse ways. For example, a correction factor can be generated by a three dimensional (3D) vector that maps from the centroid of the given face region(s) into the centroid of the flesh tone database. After the correction factor is determined, other methodologies may be used to determine whether to apply the correction factor.

In step 116 of Figure 1, the correction factor is applied or employed to the entire image in order to provide white balancing (or hue cast removal) to it. As such, white balancing is provided to the entire image (or any portion of it) based upon the correction factor determined to correct the facial colors of the human facial region(s). It is understood that step 116 may be implemented in a wide variety of ways. For example, the previously defined 3D vector can be applied to each pixel of the entire image. The correction factor can be modified in a number of ways based on a number of factors. For example, step 116 may indude a safeguard limiting the correction that is done to the image. As such, this safeguard may determine whether the correction factor is beyond a defined limitation. If so, the intensity of the correction factor may be decreased to the defined limitation. In this manner, images are corrected where there is, for example, hue cast problems white unusual cases, such as, a person with their face covered in green paint within the image is not overly "corrected" to the point of distorting it.

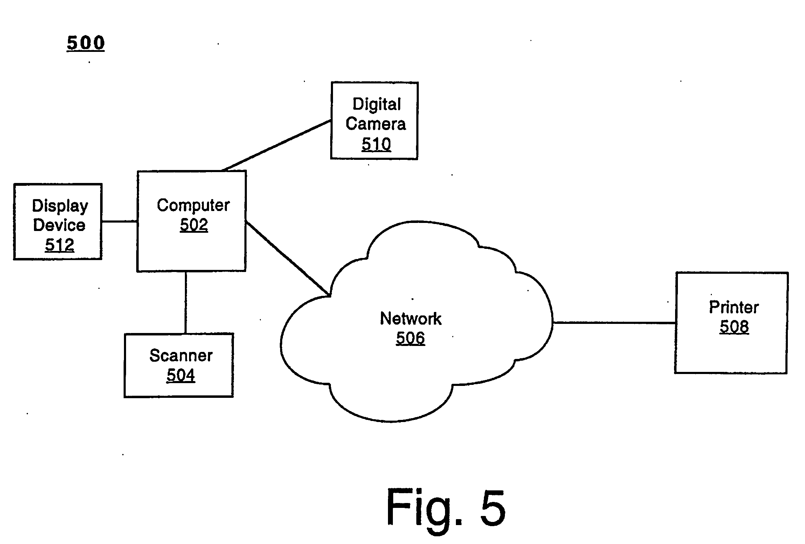

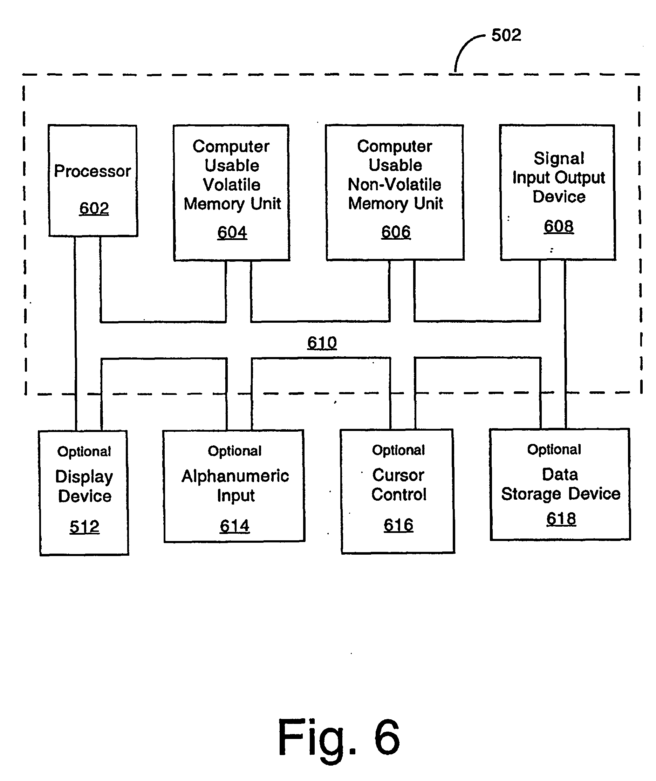

At step 118, optionally, the data associated with the resulting output image may be stored utilizing any type of memory device. It is appreciated that the memory device utilized at step 118 may include, but is not limited to, random access memory (RAM), static RAM, dynamic RAM, read only memory (ROM), programmable ROM, flash memory, erasable programmable read only memory (EPROM), electrically erasable programmable read only memory (EEPROM), disk drive (e.g., hard disk drive), diskette, and/or magnetic or optical disk, e.g., compact disc (CD), digital versatile disc (DVD), and the like. It is noted that once the output image is stored, it may be utilized for other functions such as being printed out by a printer (e.g., 508 of Figure 5), displayed on a display screen (e.g., 512 of Figures 5 and 6), and the like. However, it is understood that the output image does not need to be stored at step 118 before being printed or displayed. Specifically, the white balancing of flowchart 100 can be performed on-the-fly in line with other image processing pipelines (e.g., camera capture or printing). Once step 118 is completed, the present embodiment exits flowchart 100.

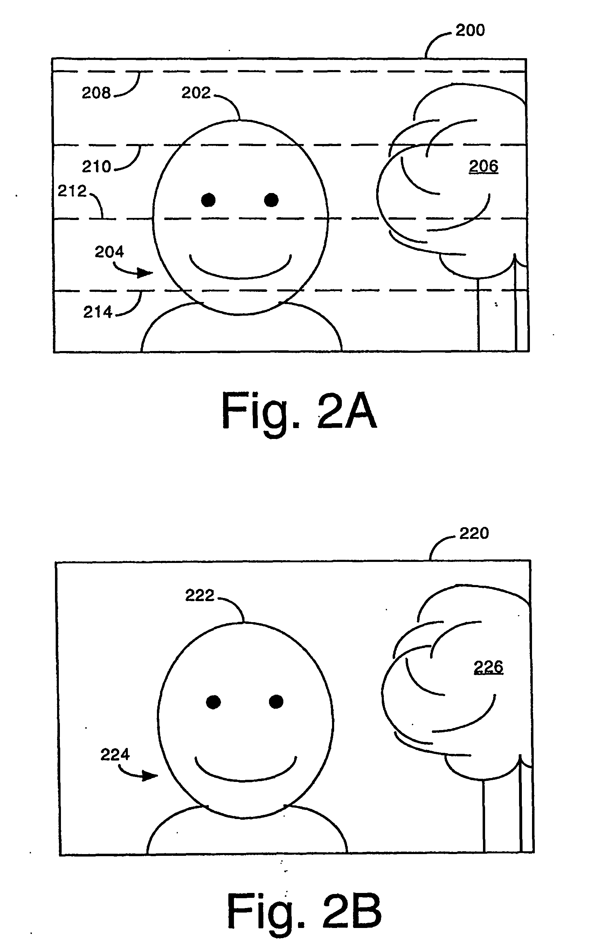

Figure 2A is a diagram illustrating an exemplary image 200 (e.g., photograph, picture, digital image, etc.) that may be received for processing in accordance with an embodiment of the present invention. For example, image 200 may be received from an image scanner or a digital camera coupled to a computer. Alternatively, image 200 may be received by a digital camera or any other type of image processing system. As such, image 200 may then be processed by an embodiment (e.g., flowchart 100 or flowchart 300) of the present invention for it to be, for example, stored by a memory device, printed out by a printer or shown on a display device. It is noted that image 200 includes a tree 206 along with a person 204 having a facial region 202. Additionally, image 200 also includes a hue cast problem represented as horizontal dashed lines 208, 210, 212 and 214 that transverse image 200. It is understood that hue cast may indude when an image (e.g., 200) has some dominant color hue associated with it. For example, everything within the image (e.g., 200) may appear reddish or greenish.

Figure 2B is a diagram illustrating the positive effects of processing the image 200 of Figure 2A in accordance with an embodiment of the present invention. Specifically, image 220 of Figure 2B represents a reproduction of image 200 after being processed by an embodiment in accordance with the present invention (e.g., flowchart 100 or flowchart 300). As shown, white balancing (or hue cast removal) may be provided to the image based upon a correction factor determined to correct the facial colors of the human facial region 222. In this manner, image 220 is visually improved by removing the hue cast represented by horizontal dashed lines 208, 210,212 and 214.

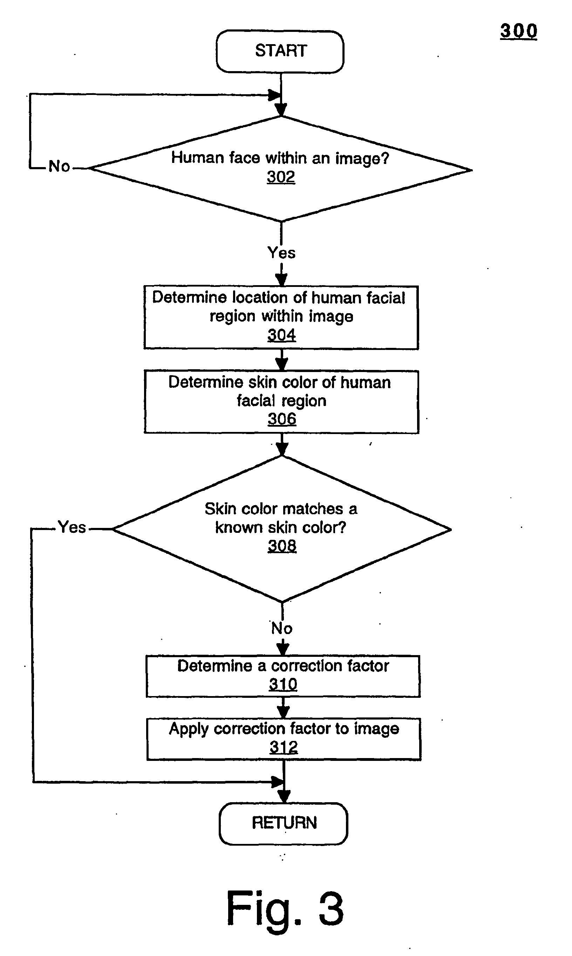

Figure 3 is a flowchart 300 of steps performed in accordance with another embodiment of the present invention for white balancing an image. Flowchart 300 indudes processes of the present invention which, in one embodiment, are carried out by a processors) and electrical components under the control of computer readable and computer executable instructions. The computer readable and computer executable instructions may reside, for example, in data storage features such as computer usable volatile memory, computer usable non-volatile memory and/or computer usable mass data storage. However, the computer readable and computer executable instructions may reside in any type of computer readable medium. Although specific steps are disclosed in flowchart 300, such steps are exemplary. That is, the present embodiment is well suited to performing various other steps or variations of the steps recited in Figure 3. Within the present embodiment, it should be appreciated that the steps of flowchart 300 may be performed by software, by hardware or by any combination of software and hardware.

The present embodiment provides a method for automatically white balancing (or hue cast removal or reduction) an image. For example, a determination is made as to whether any human facial regions exist within the image. If there is one or more human facial regions present within the image, the location of the human facial region or regions are determined. As such, the colors that are within the region or regions that define a human face within the image are compared to known facial colors. If the colors of the facial region or regions do not match known skin colors, a correction factor is generated that, when applied to the image, will adjust the colors of the human facial region(s) to substantially match known facial colors. The correction factor is then applied to the entire image (or a portion of it) thereby white balancing it and removing hue cast. In this manner, white balancing may be provided to the entire image (or a portion of it) based upon the correction factor determined to correct the facial colors of the human facial region(s).

It is noted that the functionality of flowchart 300 may be implemented with, but is not limited to, software and/or hardware associated with a printer (e.g., printer driver), digital camera, image scanner, computer or any other image processing system.

At step 302 of Figure 3, the present embodiment determines whether there is a human facial region(s) within an image. If it is determined that no human facial regions are within the image, the present embodiment proceeds to the beginning of step 302. However, if it is determined that there is a human facial region(s) within the image, the present embodiment proceeds to step 304. It is appreciated that step 302 may be implemented in a wide variety of ways. For example, the Jones Viola Algorithm, a Neural Network-Base Face Detection algorithm, and/or any other face detection technique may be utilized in order to perform the functionality at step 302.

In step 304, the present embodiment determines the location(s), or position(s), of the human facial region(s) within the image. The location(s) of the human facial region(s) may be contained within a bounding box(es), a binary mask(s), or some type of defined facial region(s) at step 304. It is noted that at least some portion, perhaps not all, of the human facial region(s) within the image may be defined at step 304. It is understood that step 304 may be implemented in diverse ways. For example, the Jones Viola Algorithm and/or a Neural Network-Base Face Detection algorithm may be utilized to implement the functionality at step 304.

At step 306 of Figure 3, the present embodiment determines the skin color located within the defined face region(s), or some portion of the defined face region(s). It is appreciated that the determination of the skin color of the face region(s) may be implemented in a wide variety of ways. For example, an average of the hue and chroma located with the facial region(s) may be done as part of the skin color determination at step 306. Alternatively, an image smoothing technique may be utilized as part of the color determination at step 306. Within another embodiment, a centroid is determined at step 306 of the hue and chroma distribution within the defined face region(s). It is noted that an image smoothing technique may be utilized in combination with the determination of the centroid at step 306. Additionally, as part of determining the skin color in step 306, outlier hue and chroma values of said human facial region(s) may be removed from consideration.

At step 308, a determination is made as to whether the skin color of the face region(s) substantially match a range of known flesh (or skin) colors. For example, the determination at step 308 can be accomplished by comparing each pixel of the face region(s) to a database of known flesh (or skin) colors. If the skin color of the face region(s) substantially matches a known range of flesh color(s) at step 308, the present embodiment proceeds to exit flowchart 300. However, if the skin color of the face region(s) does not substantially match the known flesh color(s) at step 308, the present embodiment proceeds to step 310. It is understood that step 308 may include converting the skin color of the face region(s) into the same color space as the known flesh color(s) in order to facilitate a comparison and determination at step 308. For example, if the known flesh (or skin) colors are in the standard red-green-blue (sRGB) color space, then the skin color data of the face region(s) may be converted into that same color space as part of the determination at step 308.

In step 310 of Figure 3, a correction factor is created or generated which changes (or moves) the determined skin color of the face region(s) into a region of known flesh (or skin) colors. It is appreciated that the correction factor of step 310 may be determined and generated in a wide variety of ways. For example, a correction factor can be generated by a 3D vector that maps from the determined skin color of the given face region(s) into the range of known flesh colors (e.g., of a database). After the correction factor is determined, other methodologies may be used to determine whether to apply the correction factor.

In step 312, the correction factor is implemented to the entire image (or any portion of it) in order to provide white balancing or hue cast removal to it. As such, white balancing is provided to the entire image (or any portion of it) based upon the correction factor determined to correct the facial skin color(s) of the human facial region(s). It is understood that step 312 may be implemented in a wide variety of ways. For example, the previously defined 3D vector can be applied to each pixel of the entire image (or any portion of it). The correction factor can be modified in a number of ways based on a number of factors. For example, step 312 may include a safeguard which limits the correction that is applied to the image. As such, the safeguard may determine whether the correction factor exceeds a defined boundary. If so, the value of the correction factor may be reduced in order to meet the defined boundary. In this manner, images are corrected where there is, for example, hue cast problems while unusual cases, such as, a person with their face covered in blue paint within the image is not overly "corrected" to the point of distorting it. Once step 312 is completed, the present embodiment exits flowchart 300.

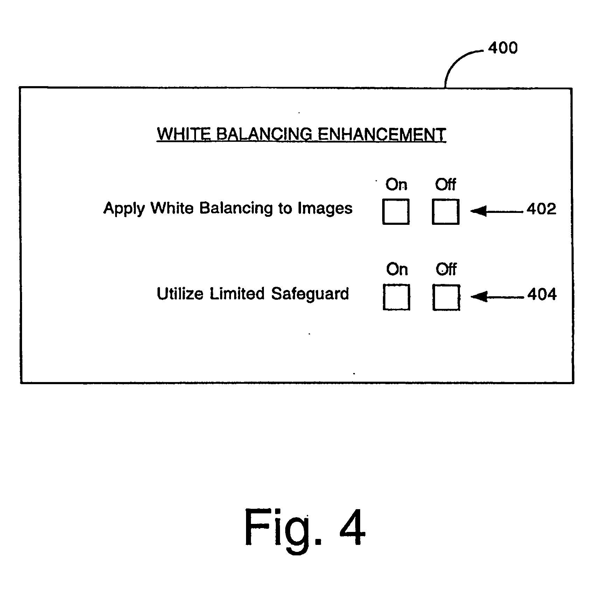

Figure 4 is a diagram of an exemplary white balancing enhancement dialog box 400 that may be utilized in accordance with an embodiment of the present invention. It is appreciated that the white balancing dialog box 400 may be implemented as, but is not limited to, a graphical user interface (GUI). The white balancing dialog box 400 may be utilized in conjunction with a method (e.g., flowchart 100 and/or flowchart 300) for providing white balancing (or hue casting reduction or removal) to an image.

Specifically, the white balancing enhancement dialog box 400 enables a user to specifically tailor the manner in which white balancing is performed with relation to any image induding one or more human facial regions. For example, the white balancing dialog box 400 provides its user at line 402 the ability to turn on or off the application of white balancing enhancement for an image. As such, if the "Off" box at line 402 is selected by the user, a method (e.g., flowchart 100 or 300) of white balancing an image in accordance with an embodiment of the present invention will not be performed. Furthermore, if the user chooses to have white balancing enhancement applied to the image by selecting the "On" box at line 402, the user is then able to modify white balancing enhancement For example, the user may turn on or off the limited safeguard functionality at line 404 by selecting the corresponding box. In this manner, the white balancing enhancement can include a safeguard that limits the amount of correction that is applied to an image, as described herein.

It is noted that other white balancing functionality may be incorporated as part of the white balancing enhancement dialog box 400 of Figure 4. In this manner, the white balancing dialog box 400 provides its user even more options for specifically controlling the implementation of white balancing for images. It is appreciated that the white balancing enhancement dialog box 400 may be an optional feature that provides users the ability to personalize the white balancing enhancement associated with any image.

### EXEMPLARY NETWORK IN ACCORDANCE WITH THE PRESENT INVENTION

Figure 5 is a block diagram of an exemplary network 500 that may be utilized in accordance with an embodiment of the present invention. Within networking environment 500 a computer 502 may be coupled to, but is not limited to, a digital camera 510, an image scanner 504, a display device 512 and a printer 508. Specifically, the computer 502 and the printer 508 are communicatively coupled to network 506. It is appreciated that computer 502 and printer 508 may be communicatively coupled to network 506 via wired and/or wireless communication technologies. In this manner, computer 502 is capacitated to transmit digital images for printing to printer 508 via network 506.

The network 506 of networking environment 500 may be implemented in a wide variety of ways in accordance with the present embodiment. For example, network 506 may be implemented as, but is not limited to, a local area network (LAN), a metropolitan area network (MAN), a wide area network (WAN) and/or the Internet It is noted that networking environment 500 is well suited to be implemented without network 506. As such, computer 502 may be communicatively coupled to printer 508 via wired and/or wireless communication technologies. As such, computer 502 is able to transmit digital images to printer 508 to be printed.

Within Figure 5, the digital camera 510 and image scanner 504 may be communicatively coupled to computer 502. It is understood that the digital camera 510 and scanner 504 may be communicatively coupled to computer 502 via wired and/or wireless communication technologies. In this fashion, the digital camera 510 and the image scanner 504 are able to transmit digital images to the computer 502 where they may be stored. Subsequently, the digital images may be output by computer 502 to be seen on display device 512 by a viewer. Furthermore, the digital images may be output by computer 502 to printer 508 via network 506 to subsequently be printed.

It is noted that the digital camera 510 may not be coupled to computer 502. That is, the digital camera 510 may be implemented in such a manner that an embodiment (e.g., flowchart 100 or flowchart 300) of the present invention may be employed to operate as part of it or with any type of imaging system or device (e.g., image scanner 504, printer 508, computer 502 and/or the like).

### EXEMPLARY HARDWARE IN ACCORDANCE WITH THE PRESENT INVENTION

Figure 6 is a block diagram of an embodiment of an exemplary computer system 502 that may be used in accordance with the present invention. It is understood that system 502 is not strictly limited to be a computer system. As such, system 502 of the present embodiment is well suited to be any type of computing device (e.g., server computer, desktop computer, laptop computer, portable computing device, etc.). Within the discussions of the present invention herein, certain processes and steps were discussed that may be realized, in one embodiment, as a series of instructions (e.g., software program) that reside within computer readable memory units of computer system 502 and executed by a processors) of system 502. When executed, the instructions cause computer 502 to perform specific actions and exhibit specific behavior which are described herein.

Computer system 502 of Figure 6 comprises an address/data bus 610 for communicating information, one or more central processors 602 coupled with bus 610 for processing information and instructions. Central processor unit(s) 602 may be a microprocessor or any other type of processor. The computer 502 also indudes data storage features such as a computer usable volatile memory unit 604, e.g., random access memory (RAM), static RAM, dynamic RAM, etc., coupled with bus 610 for storing information and instructions for central processors) 602, a computer usable non-volatile memory unit 606, e.g., read only memory (ROM), programmable ROM, flash memory, erasable programmable read only memory (EPROM), electrically erasable programmable read only memory (EEPROM), etc., coupled with bus 610 for storing static information and instructions for processors) 602.

System 502 also indudes one or more signal generating and receiving devices 608 coupled with bus 610 for enabling system 502 to interface with other electronic devices. The communication interface(s) 608 of the present embodiment may indude wired and/or wireless communication technology. For example, in one embodiment of the present invention, the communication interface 608 is a serial communication port, but could also alternatively be any of a number of well known communication standards and protocols, e.g., a Universal Serial Bus (USB), an Ethernet adapter, a FireWire (IEEE 1394) interface, a parallel port, a small computer system interface (SCSI) bus interface, an infrared (IR) communication port, a Bluetooth wireless communication adapter, a broadband connection, and the like. In another embodiment, a digital subscriber line (DSL) connection may be employed. In such a case the communication interface(s) 608 may include a DSL modem. Additionally, the communication interface(s) 608 may provide a communication interface to the internet

Optionally, computer system 502 can include an alphanumeric input device 614 including alphanumeric and function keys coupled to the bus 610 for communicating information and command selections to the central processor(s) 602. The computer 502 can also indude an optional cursor control or cursor directing device 616 coupled to the bus 610 for communicating user input information and command selections to the processor(s) 602. The cursor directing device 616 can be implemented using a number of well known devices such as a mouse, a track ball, a track pad, an optical tracking device, a touch screen, etc. Alternatively, it is appreciated that a cursor can be directed and/or activated via input from the alphanumeric input device 614 using special keys and key sequence commands. The present embodiment is also well suited to directing a cursor by other means such as, for example, voice commands.

The system 502 of Figure 6 can also include a computer usable mass data storage device 618 such as a magnetic or optical disk and disk drive (e.g., hard drive or floppy diskette) coupled with bus 610 for storing information and instructions. An optional display device 512 is coupled to bus 610 of system 502 for displaying video and/or graphics. It should be appreciated that optional display device 512 may be a cathode ray tube (CRT), flat panel liquid crystal display (LCD), field emission display (FED), plasma display or any other display device suitable for displaying video and/or graphic images and alphanumeric characters recognizable to a user.

Accordingly, embodiments of the present invention can enable a computer device, or devices that include an embedded computer, that performs digital image processing to correctly white balance digital images that indude human facial regions.

The foregoing descriptions of specific embodiments of the present invention have been presented for purposes of illustration and description. They are not intended to be exhaustive or to limit the invention to the precise forms disclosed, and it is evident many modifications and variations are possible in light of the above teaching. The embodiments were chosen and described in order to best explain the principles of the invention and its practical application, to thereby enable others skilled in the art to best utilize the invention and various embodiments with various modifications as are suited to the particular use contemplated. It is intended that the scope of the invention be defined by the Claims appended hereto and their equivalents.

## Claims

1. A method (300) for white balancing an image, said method comprising:
determining (304) a location of a human facial region within said image;
determining (306) skin color of said human facial region;
determining (310) a correction factor to change said skin color to substantially match a range of known skin colors; and
applying (312) said correction factor to said image to provide white balancing.

2. The method as described in Claim 1, further comprising:
determining (302) whether said human facial region exists within said image.

3. The method as described in Claim 2, further comprising:
applying (106) a technique other than said correction factor to said image to provide white balancing to said image.

4. The method as described in Claim 1, further comprising:
determining (308) whether said skin color substantially matches said range of known skin colors.

5. The method as described in Claim 1 wherein said image is a digital image.

6. The method as described in Claim 1 wherein said method is performed by a printer driver, a digital camera (510), an image scanner (504) or a computer (502).

7. The method as described in Claim 1 wherein said determining said skin color of said human facial region comprises determining (108) a centroid of the hue and chroma distribution of said human facial region.

8. The method as described in Claim 7, further comprising:
determining (110) whether said centroid of the hue and chroma distribution of said human face region substantially match said range of known skin colors.

9. The method as described in Claim 1 wherein said determining said skin color of said human facial region comprises utilizing an image smoothing technique on said human facial region.

10. The method as described in Claim 1 wherein said determining said skin color of said human facial region comprises determining an average of the hue and chroma of said human facial region.
